(19) Europäisches Patentamt / European Patent Office / Office européen des brevets

(11) **EP 3 557 816 B1**

(12) **EUROPEAN PATENT SPECIFICATION**

(45) Date of publication and mention
of the grant of the patent:
**14.01.2026 Bulletin 2026/03**

(21) Application number: **17894461.7**

(22) Date of filing: **24.01.2017**

(51) International Patent Classification (IPC):
***H04L 41/0681*** (2022.01)

(52) Cooperative Patent Classification (CPC):
**H04L 41/0681; H04L 41/00;** Y04S 40/00

(86) International application number:
**PCT/CN2017/072495**

(87) International publication number:
**WO 2018/137147 (02.08.2018 Gazette 2018/31)**

(54) **SELF-DIAGNOSIS METHOD FOR COMMUNICATION PROTOCOL OF SECURITY-LEVEL INSTRUMENTATION AND CONTROL SYSTEM OF NUCLEAR POWER PLANT**

SELBSTDIAGNOSEVERFAHREN FÜR KOMMUNIKATIONSPROTOKOLL EINES SICHERHEITSSTUFENINSTRUMENTES UND STEUERUNGSSYSTEM FÜR EIN KERNKRAFTWERK

PROCÉDÉ D'AUTO-DIAGNOSTIC DE PROTOCOLE DE COMMUNICATION DE SYSTÈME D'INSTRUMENTATION ET DE COMMANDE DE NIVEAU DE SÉCURITÉ D'UNE CENTRALE NUCLÉAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.10.2019 Bulletin 2019/43**

(73) Proprietors:
• **China Techenergy Co., Ltd**
**Beijing 100094 (CN)**
• **China General Nuclear Power Corporation (CGN)**
**Shenzhen, Guangdong 518027 (CN)**

(72) Inventors:
• **JIANG, Guojin**
**Beijing 100094 (CN)**
• **WANG, Jingwei**
**Beijing 100094 (CN)**
• **ZHANG, Chunlei**
**Beijing 100094 (CN)**

• **ZHANG, Zhihui**
**Beijing 100094 (CN)**
• **JIN, Chengri**
**Beijing 100094 (CN)**
• **GAO, Chao**
**Beijing 100094 (CN)**
• **MA, Zhaoyang**
**Beijing 100094 (CN)**
• **MA, Guangqiang**
**Beijing 100094 (CN)**

(74) Representative: **Germain Maureau**
**12, rue Boileau**
**69006 Lyon (FR)**

(56) References cited:
**EP-A1- 2 053 774        WO-A2-2006/054836**
**CN-A- 102 082 773      CN-A- 103 391 223**
**CN-A- 103 457 791      CN-A- 105 450 469**
**US-A1- 2002 010 874   US-A1- 2010 192 051**
**US-A1- 2014 126 580**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical Field**

The invention relates to a diagnosis method for a communication protocol of a safety instrumentation and control system of a nuclear plant, in particular to a diagnosis method for a point-to-point communication protocol.

**Background Art**

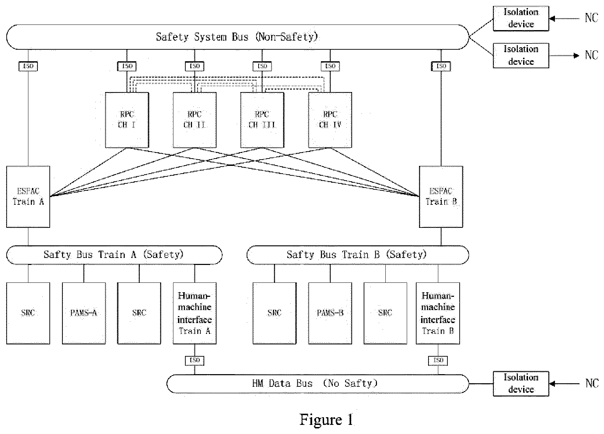

A safety instrumentation and control system, the "neural center" of a nuclear plant, is the most important means to ensure the safe and reliable operation of a nuclear plant. In foreign countries, TXS, Meltac-N, Tricon and Common-Q are the main safety instrumentation and control systems for nuclear plants. For TXS, a SINEC L2 communication network based on Profibus is adopted for communication among redundant channels in the system; for Meltac-N, point-to-point communication based on RS-485 is adopted for communication between control stations in the system; for Tricon, a bus communication based on RS-232/485 is adopted in the system internal communication; for Common-Q, transmission of redundant inter-channel voting logic signals within the system employs RS-232 based HSL point-to-point communication. RS-232/485 is the main serial communication interface in an industrial control network. A typical structure of a safety instrumentation and control system of a nuclear plant is shown in Figure 1, logical coincidence operation needs to be carried out among processing units (RPC) in Figure 1, and direct data interaction is inevitable. This kind of communication only involves two processing units, with a small amount of data but high requirements on the reliability, real-time and security of data communication. The dotted lines in Figure 1 indicate the point-to-point communication network. Due to the occasional fault of the hardware components and bugs of the software itself, the following eight communication errors can occur, which are data crash, accidental retransmission, erroneous sequence, loss, delay timeout, invalid insertion, camouflage messages and erroneous addressing. If the eight network errors are not diagnosed, a misuse of the erroneous network data may happen, and the safety and stability of the safety instrumentation and control system of the whole nuclear plant are put in danger consequently, or even worse, an accidental shutdown of the nuclear plant can be caused, leading to inestimable property loss and personal safety accidents.

Self-diagnosis refers to the technology by which the system self-detects and processes the fault or failure event by setting a diagnosis function, and the core of self-diagnosis technology is the diagnosis measure and the fault processing after diagnosis. A typical self-diagnostic process is as follows: after a fault occurs in the operation process, the system should identify the abnormal condition of the system through hardware or software, quickly report the abnormal information, start a processing mechanism, enter a degraded operation or fault safety state, and the system can restore the normal operation state only until the fault is eliminated.

For example, CN103457791A discloses a self-diagnosis method for an intelligent substation network sampling and control link, which can timely discover and troubleshoot various network faults of network operation, and manage and record the network fault information, so as to further ensure the reliability and safety of network sampling and network control in substation applications, and improve the intelligent level of the substation.

CN102984097A discloses transceiver self-diagnostics for balancing electromagnetic interference reduction within a channel, which enables communication links supporting differential signaling to carry common mode signals, and any detected selective operation such as appropriate processing of signal energy corresponding to the differential signal energy to provide measurements corresponding to electromagnetic compatibility (EMC) of the communication link.

At present, the prior art about network self-diagnosis technology falls all within those aiming at an industrial standard control network, being not suitable for a point-to-point network communication protocol in an existing nuclear plant safety instrumentation and control system.

EP 2053774A1 and WO 2006/054836A2 provide respective technical solutions; however, the above mentioned problem still remains unsolved.

**Summary of the Invention**

Aiming at the defects in the prior art, the invention provides a self-diagnosis method for a communication protocol of a safety instrumentation and control system of a nuclear plant, which can effectively determine network communication errors.

The invention provides a self-diagnosis method for a communication protocol of a safety instrumentation and control system of a nuclear plant, as defined by the appended independent claim 1.

Compared with the prior art, the self-diagnosis method for the communication protocol of the safety instrumentation and control system of a nuclear plant of the invention realizes full coverage of diagnosis of eight network errors; whether the upper layer data quality bit is valid or not is accurately determined, so that erroneous data cannot be misused; and a reasonable frequency tolerance threshold for the diagnosed network fault is set, so that the stability of the system is ensured (repeated state jump caused by occasional errors is avoided), and the network fault can be reported instantly when confirmed. The present method minimizes the possibility of mistakes in determination, and can effectively ensure the point-to-point communication quality of the safety instrumentation and control system of a nuclear plant.

**Brief Description of the Drawings**

Figure 1 is a schematic diagram of a typical nuclear plant safety instrumentation and control system;
Figure 2 is a block diagram of the sending process of the self-diagnosis method for the communication protocol of the safety instrumentation and control system of a nuclear plant according to the present invention; and
Figure 3 is a block diagram of the process for receiving data diagnosis of the self-diagnosis method for the communication protocol of the safety instrumentation and control system of a nuclear plant according to the present invention.

**Detailed Description of the Invention**

The self-diagnosis method for the communication protocol of the safety instrumentation and control system of a nuclear plant is further described with reference to the drawings.

The invention relates to a self-diagnosis implementation method based on a communication method related to the applicant's patent ZL200910238712.6 "Communication Method based on Inter-Column Safety Communication Network Protocol of Reactor Protection System". The patent ZL200910238712.6 relates to a safety network protocol for inter-column communication of a system, in particular to a communication method based on an inter-column safety communication network protocol of a reactor protection system. The communication protocol is suitable for a nuclear power control system, however, according to the self-diagnosis requirements of IEC6178-3, IEC60880 and IEC61508 on a safety network, a full diagnostic coverage of eight network errors including data collapse, accidental retransmission, wrong sequence, loss, delay timeout, invalid insertion, masquerading messages and error addressing is needed, and the requirement of a network residual rate has also to be met. Network residual rate is an important index to measure the safety level of a safety network. In IEC61784-3, there is a clear formula for calculating the network residual rate, so that the residual rate of the designed network protocol can be quantitatively evaluated, and the formula is as follows:

$$\triangle SLPe=RSL(Pe)\times v\times m$$

| Symbols | Definitions |
|---|---|
| ∆SLPe | Safety layer residual error rate (h-1) at a certain bit transmission error rate |
| Pe | Bit error rate of the transmission medium, typically being 10-2 without better data support |
| RSLPe | Residual error rate of a single safety message |
| V | Maximum number of safety messages per hour |
| m | Maximum number of message recipients allowed in a single safety function |

The residual error rate RSL of a single safety message (Pe) is determined by the selected CRC checking process, and the calculation formula of the residual error rate of the message subjected to CRC checking is as follows:

$$RCRCPe=2-r+k=d\ minnCnk\times Pek\times (1-Pe)n-k$$

| Symbols | Meanings |
|---|---|
| r | Length of an additional CRC check string |
| n | Length of a transmission data message |
| dmin | Minimum Hamming Distance |

Hamming Distance: the number of bits taking different values among corresponding bits of two codewords is called the Hamming distance of the two codewords. In an active code set, the minimum value of the Hamming distance of any two codewords is referred to as the Hamming distance of the code set. Examples are as follows: 10101 and 00110 have their first bit, fourth bit and fifth bit different in sequence from the first, so the Hamming distance is 3.

**Embodiment 1**

The self-diagnosis method of the present invention relates to using asynchronous communication by the receiver and the sender, and the receiver cannot send a response frame to the sender. The network equipment can only read the network data frame in a regular inquiry mode when sending, receiving and reading the network data, and cannot read the network data by using an interruption mechanism. The data frame structure is shown in the following table, wherein the data frame structure includes a destination address, a source address, an application layer protocol number, an application layer data part and a CRC check code. Where the application layer protocol number is constantly "OXAABB" in this embodiment.

| Destination MAC Address | Source MAC Address | Application Layer Protocol No. | Application Layer Data | CRC Checksum |
|---|---|---|---|---|

The total length of an application layer data frame is defined as 1000 bytes, and the data frame of the application layer is shown in the following table:

| function code | application mode | TICK value | message serial number | length of data | length of valid data in this group | total number of groups | serial number of the group | retransmission bit | reserved area | upper layer data | CRC check code |
|---|---|---|---|---|---|---|---|---|---|---|---|

Wherein the function code specifically identifies a data pattern;

the application mode is specified according to the protocol, and has a fixed value of 3;

the TICK value is increased by 1 every period, namely the number of periods;

the message serial number is namely the serial number of the message sent in the period, and this field is strongly correlated with the retransmission bit, and when the serial number is 1, it indicates that the data frame is initially transmitted in the period, and the retransmission bit is 0; when the serial number is 2, it indicates that a data frame is retransmitted in the period, and the retransmission bit 1;

the length of message name represents the length of the whole data frame, wherein the starting position is a destination MAC address, and the ending position is a CRC check code;

the length of valid data in this group represents the valid data length of the upper layer data;

the total number of groups represents the total packet number of the data in this group;

the serial number of the group represents the packet No. of the data in the group;

the retransmission bit: 0 represents that a data frame is initially transmitted in the period; 1 represents a data frame is retransmitted in the period. Except a message serial number, a retransmission bit and a CRC check code, other fields of the two packets of data frames are completely consistent;

the reserved area has a value of 0 and is an extension field of the field;

the upper layer data represents a command that the system collects or needs to send;

the CRC check code: when the retransmission bit is 0, the used CRC check value is 0x04C11DB7; when the retransmission bit is 1, the used CRC check value is 0xBA0DC66B.

In the embodiment, the sender acquires an operation period of 10ms for itself, a local MAC {0x01, 0x05, 0x03, 0x07, 0x0a}, a destination MAC {0x02, 0x03, 0x05, 0x0a, 0x0b} in the initialization phase, the receiver acquires an operation period of 10ms for itself, a local MAC {0x02, 0x03, 0x05, 0x0a, 0x0b}, and a destination MAC {0x01, 0x05, 0x03, 0x07, 0x0a} in the initialization phase. The time window for receiving data frames set by the receiver is 20 milliseconds, and the tolerance threshold value for times of diagnostic abnormalities is 3. The specific diagnosis method comprises the steps of:

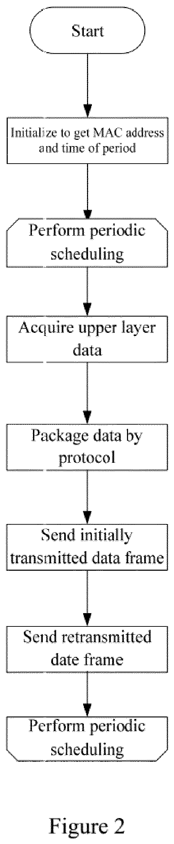

step 1, after a sender enters a cycle period, as shown in figure 2, periodically acquiring upper layer data and packaging the upper layer data in the protocol format, wherein the TICK value is the number of cycle periods and starts from 0; for the initially transmitted data frame, the message serial number being 0, the retransmission bit being 0, and the CRC check value being 0x04C11DB7; for a retransmitted data frame, the message serial number being 1, the retransmission bit being 1, and the CRC check value being 0xBA0DC66B;

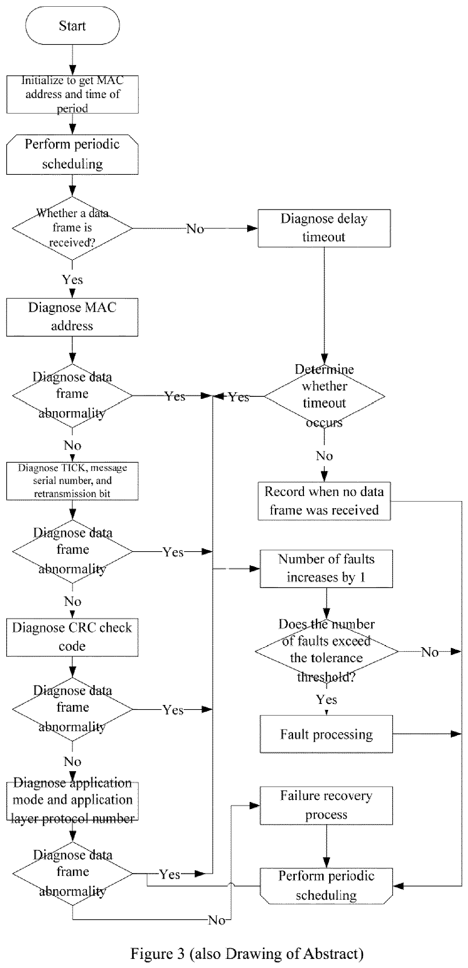

step 2, after the receiver enters a cycle period, as shown in figure 3, starting to carry out a periodic diagnosis on the received data frame; if the receiver does not receive the data frame in the current period, proceeding to the step 6; if the receiving party receives the data frame sent by the sender, checking whether the destination MAC of the data frame is {0x02, 0x03, 0x05, 0x0a, 0x0b}, whether the source MAC is {0x01, 0x05, 0x03, 0x07, 0x0a}, diagnosing as erroneous addressing if the data frame is checked as abnormal, recording the reason when the diagnostic result is abnormal, proceeding to the step 7; and proceeding to the step 3 when the check result is normal;

step 3, determining whether four network errors such as retransmission, erroneous sequence, loss and invalid insertion occur or not by diagnosing the TICK, the message serial number and the retransmission bit of data frames, wherein the specific method is as follows:

in the case that the last data frame has a TICK value being OX5A, a message serial number being 1, and a retransmission bit being 0, and the received data frame this time has a TICK value being OX5B, a message serial number being 1, and a retransmission bit being 0, it can be diagnosed as data frame loss;

in the case that the last data frame has a TICK value being OX5A, a message serial number being 1, and a retransmission bit being 0, and the received data frame this time has a TICK value being OX5A, a message serial number being 1, and a retransmission bit being 0, it can be diagnosed as retransmission;

in the case that the last data frame has a TICK value being OX5A, a message serial number being 1, and a retransmission bit being 0, and the received data frame this time has a TICK value being OX50, a message serial number being 1, and a retransmission bit being 0, it can be diagnosed as erroneous sequence;

in the case that the last data frame has a TICK value being OX5A, a message serial number being 1, and a retransmission bit being 0, and the received data frame this time has a TICK value being OX3C, a message serial number being 9, and a retransmission bit being 0, it can be diagnosed as invalid insertion; and

in the case that the last data frame has a TICK value being OX5A, a message serial number being 0, and a retransmission bit being 0, and the received data frame this time has a TICK value being OX5A, a message serial number being 2, and a retransmission bit being 1, it can be diagnosed as normal;

according to the above diagnostic information, recording the abnormal reason when the abnormality is diagnosed, proceeding to the step 7, and proceeding to the step 4 when the check result is normal;

step 4, performing respective CRC checks on the initially transmitted data frame and the retransmitted date frame, and performing a binary comparison on upper-layer data of the two packets of data frames if the checks are successful; if the upper layer data of the two packet data frames are compared to be consistent, diagnosing it as normal, proceeding to the step 5, otherwise, diagnosing it as data collapse, and proceeding to the step 7;

step 5, checking whether the application mode and the application layer protocol number of the data frame are preset values or not, namely checking whether the application mode is equal to 3 or not, whether the application layer protocol number is equal to 0XAABB or not, if not, diagnosing as a camouflage message, proceeding to the step 7, otherwise, diagnosing as a normal message, and proceeding to the step 8;

step 6, if no data frame is received in the period, when the accumulated time during which no data frame is received exceeds 20ms, diagnosing as delay timeout, and proceeding to the step 7; otherwise, keeping the current state and recording the time during which no data frame is received, and proceeding to the next period for diagnosis;

step 7, with the number of times of abnormities diagnosed increased by 1, if the number does not reach the tolerance threshold value, keeping the state unchanged, otherwise, carrying out fault processing of:

1) setting the quality bit of the upper layer data of the received data frame to be 0X2C, the 0X2C representing a quality bit set for the receiver, facilitating searching and positioning;

2) exterior reminder: turning off a "RUN" light representing normal communication, displaying a specific reason of a fault by using a dot matrix, displaying "WO01" to indicate that a data collapse is diagnosed, displaying "WO02" to indicate an accidental data retransmission is diagnosed, displaying "WO03" to indicate that an erroneous sequence is diagnosed, displaying "WO04" to indicate that a data loss is diagnosed, displaying "WO05" to indicate a delay overtime is diagnosed; and displaying "WO06" to indicate that an invalid insertion is diagnosed, displaying "WO07" to indicate a disguised message is diagnosed and displaying "WO08" to indicate an erroneous addressing is diagnosed;

and after fault processing is finished, proceeding to the next period for diagnosis;

step 8, resetting the number of times of abnormities diagnosed, and performing fault recovery processing of:

1) setting the quality bit of the upper layer data of the received data frame to be valid, i.e., setting the quality bit of the upper layer data to be 0; and

2) exterior reminder: turning on the "RUN" light representing normal communication, a dot matrix not displaying any information represents a good result of network diagnosis;

and after the fault recovery processing is finished, proceeding to the next period for diagnosis.

**Embodiment 2**

In this embodiment, the application layer protocol number is fixed to "0XAABB" and the application mode is fixed to a value of 3. The sender acquires an operation period of 8ms for itself, a local MAC {0x01, 0x05, 0x03, 0x07, 0x0a}, a destination MAC {0x02, 0x03, 0x05, 0x0a, 0x0b} in the initialization phase, the receiver acquires an operation period of 8ms for itself, a local MAC {0x02, 0x03, 0x05, 0x0a, 0x0b}, and a destination MAC {0x01, 0x05, 0x03, 0x07, 0x0a} in the initialization phase. The time window for receiving data frames set by the receiver is 32ms, and the tolerance threshold value for times of diagnostic abnormalities is 5. The specific diagnosis method comprises the steps of:

step 1, after a sender enters a cycle period, as shown in figure 2, periodically acquiring upper layer data and packaging the upper layer data in the protocol format, wherein the TICK value is the number of cycle periods and starts from 0; for the initially transmitted data frame, the message serial number being 0, the retransmission bit being 0, and the CRC check value being 0x04C11DB7; for a retransmitted data frame, the message serial number being 1, the retransmission bit being 1, and the CRC check value being 0xBA0DC66B;

step 2, after the receiver enters a cycle period, as shown in figure 3, starting to carry out a periodic diagnosis on the received data frame; if the receiver does not receive the data frame in the current period, proceeding to the step 6; if the receiving party receives the data frame sent by the sender, checking whether the destination MAC of the data frame is {0x02, 0x03, 0x05, 0x0a, 0x0b}, whether the source MAC is {0x01, 0x05, 0x03, 0x07, 0x0a}, diagnosing as erroneous addressing if the data frame is checked as abnormal, recording the reason when the diagnostic result is abnormal, proceeding to the step 7; and proceeding to the step 3 when the check result is normal;

step 3, determining whether four network errors such as retransmission, erroneous sequence, loss and invalid insertion occur or not by diagnosing the TICK, the message serial number and the retransmission bit of data frames, wherein the specific method is as follows:

in the case that the last data frame has a TICK value being OX5A, a message serial number being 1, and a retransmission bit being 0, and the received data frame this time has a TICK value being OX5B, a message serial number being 1, and a retransmission bit being 0, it can be diagnosed as data frame loss;

in the case that the last data frame has a TICK value being OX5A, a message serial number being 1, and a retransmission bit being 0, and the received data frame this time has a TICK value being OX5A, a message serial number being 1, and a retransmission bit being 0, it can be diagnosed as retransmission;

in the case that the last data frame has a TICK value being OX5A, a message serial number being 1, and a retransmission bit being 0, and the received data frame this time has a TICK value being OX50, a message serial number being 1, and a retransmission bit being 0, it can be diagnosed as erroneous sequence;

in the case that the last data frame has a TICK value being OX5A, a message serial number being 1, and a retransmission bit being 0, and the received data frame this time has a TICK value being OX3C, a message serial number being 9, and a retransmission bit being 0, it can be diagnosed as invalid insertion; and

in the case that the last data frame has a TICK value being OX5A, a message serial number being 0, and a retransmission bit being 0, and the received data frame this time has a TICK value being OX5A, a message serial number being 2, and a retransmission bit being 1, it can be diagnosed as normal;

according to the above diagnostic information, recording the abnormal reason when the abnormality is diagnosed, proceeding to the step 7, and proceeding to the step 4 when the check result is normal;

step 4, performing respective CRC checks on the initially transmitted data frame and the retransmitted date frame, and performing a binary comparison on upper-layer data of the two packets of data frames if the checks are successful; if the upper layer data of the two packet data frames are compared to be consistent, diagnosing it as normal, proceeding to the step 5, otherwise, diagnosing it as data collapse, and proceeding to the step 7;

step 5, checking whether the application mode and the application layer protocol number of the data frame are preset values or not, namely checking whether the application mode is equal to 3 or not, whether the application layer protocol number is equal to 0XAABB or not, if not, diagnosing as a camouflage message, proceeding to the step 7, otherwise, diagnosing as a normal message, and proceeding to the step 8;

step 6, if no data frame is received in the period, when the accumulated time during which no data frame is received exceeds 32ms, diagnosing as delay timeout, and proceeding to the step 7; otherwise, keeping the current state and recording the time during which no data frame is received, and proceeding to the next period for diagnosis;

step 7, with the number of times of abnormities diagnosed increased by 1, if the number does not reach the tolerance threshold value 5, keeping the state unchanged, otherwise, carrying out fault processing of:

1) setting the quality bit of the upper layer data of the received data frame to be 0X2C, the 0X2C representing a quality bit set for the receiver, facilitating searching and positioning;

2) exterior reminder: turning off a "RUN" light representing normal communication, displaying a specific reason of a fault by using a dot matrix, displaying "WO0a" to indicate that a data collapse is diagnosed, displaying "WO0b" to indicate an accidental data retransmission is diagnosed, displaying "WO0c" to indicate that an erroneous sequence is diagnosed, displaying "WOOd" to indicate that a data loss is diagnosed, displaying "WO0e" to indicate a delay overtime is diagnosed; and displaying "WOOf" to indicate that an invalid insertion is diagnosed, displaying "WO0g" to indicate a disguised message is diagnosed and displaying "WO0h" to indicate an erroneous addressing is diagnosed;

and after fault processing is finished, proceeding to the next period for diagnosis;

step 8, resetting the number of times of abnormities diagnosed, and performing fault recovery processing of:

1) setting the quality bit of the upper layer data of the received data frame to be valid, i.e., setting the quality bit of the upper layer data to be 0; and

2) exterior reminder: turning on the "RUN" light representing normal communication, a dot matrix not displaying any information represents a good result of network diagnosis;

and after the fault recovery processing is finished, proceeding to the next period for diagnosis.

**Embodiment 3**

In this embodiment, the application layer protocol number is fixed to "0XAABB" and the application mode is fixed to a value of 3. The sender acquires an operation period of 20ms for itself, a local MAC {0x01, 0x05, 0x03, 0x07, 0x0a}, a destination MAC {0x02, 0x03, 0x05, 0x0a, 0x0b} in the initialization phase, the receiver acquires an operation period of 20ms for itself, a local MAC {0x02, 0x03, 0x05, 0x0a, 0x0b}, and a destination MAC {0x01, 0x05, 0x03, 0x07, 0x0a} in the initialization phase. The time window for receiving data frames set by the receiver is 60ms, and the tolerance threshold value for times of diagnostic abnormalities is 2. The specific diagnosis method comprises the steps of:

step 1, after a sender enters a cycle period, as shown in figure 2, periodically acquiring upper layer data and packaging the upper layer data in the protocol format, wherein the TICK value is the number of cycle periods and starts from 0; for the initially transmitted data frame, the message serial number being 0, the retransmission bit being 0, and the CRC check value being 0x04C11DB7; for a retransmitted data frame, the message serial number being 1, the retransmission bit being 1, and the CRC check value being 0xBA0DC66B;

step 2, after the receiver enters a cycle period, as shown in figure 3, starting to carry out a periodic diagnosis on the received data frame; if the receiver does not receive the data frame in the current period, proceeding to the step 6; if the receiving party receives the data frame sent by the sender, checking whether the destination MAC of the data frame is {0x02, 0x03, 0x05, 0x0a, 0x0b}, whether the source MAC is {0x01, 0x05, 0x03, 0x07, 0x0a}, diagnosing as erroneous addressing if the data frame is checked as abnormal, recording the reason when the diagnostic result is abnormal, proceeding to the step 7; and proceeding to the step 3 when the check result is normal;

step 3, determining whether four network errors such as retransmission, erroneous sequence, loss and invalid insertion occur or not by diagnosing the TICK, the message serial number and the retransmission bit of data frames, wherein the specific method is as follows:

in the case that the last data frame has a TICK value being OX5A, a message serial number being 1, and a retransmission bit being 0, and the received data frame this time has a TICK value being OX5B, a message serial number being 1, and a retransmission bit being 0, it can be diagnosed as data frame loss;

in the case that the last data frame has a TICK value being OX5A, a message serial number being 1, and a retransmission bit being 0, and the received data frame this time has a TICK value being OX5A, a message serial number being 1, and a retransmission bit being 0, it can be diagnosed as retransmission;

in the case that the last data frame has a TICK value being OX5A, a message serial number being 1, and a retransmission bit being 0, and the received data frame this time has a TICK value being OX50, a message serial number being 1, and a retransmission bit being 0, it can be diagnosed as erroneous sequence;

in the case that the last data frame has a TICK value being OX5A, a message serial number being 1, and a retransmission bit being 0, and the received data frame this time has a TICK value being OX3C, a message serial number being 9, and a retransmission bit being 0, it can be diagnosed as invalid insertion; and

in the case that the last data frame has a TICK value being OX5A, a message serial number being 0, and a retransmission bit being 0, and the received data frame this time has a TICK value being OX5A, a message serial number being 2, and a retransmission bit being 1, it can be diagnosed as normal;

according to the above diagnostic information, recording the abnormal reason when the abnormality is diagnosed, proceeding to the step 7, and proceeding to the step 4 when the check result is normal;

step 4, performing respective CRC checks on the initially transmitted data frame and the retransmitted date frame, and performing a binary comparison on upper-layer data of the two packets of data frames if the checks are successful; if the upper layer data of the two packet data frames are compared to be consistent, diagnosing it as normal, proceeding to the step 5, otherwise, diagnosing it as data collapse, and proceeding to the step 7;

step 5, checking whether the application mode and the application layer protocol number of the data frame are preset values or not, namely checking whether the application mode is equal to 3 or not, whether the application layer protocol number is equal to 0XAABB or not, if not, diagnosing as a camouflage message, proceeding to the step 7, otherwise, diagnosing as a normal message, and proceeding to the step 8;

step 6, if no data frame is received in the period, when the accumulated time during which no data frame is received exceeds 60ms, diagnosing as delay timeout, and proceeding to the step 7; otherwise, keeping the current state and recording the time during which no data frame is received, and proceeding to the next period for diagnosis;

step 7, with the number of times of abnormities diagnosed increased by 1, if the number does not reach the tolerance threshold value 2, keeping the state unchanged, otherwise, carrying out fault processing of:

1) setting the quality bit of the upper layer data of the received data frame to be 0X2C, the 0X2C representing a quality bit set for the receiver, facilitating searching and positioning;

2) exterior reminder: turning off a "RUN" light representing normal communication, displaying a specific reason of a fault by using a dot matrix, displaying "WO0A" to indicate that a data collapse is diagnosed, displaying "WO0B" to indicate an accidental data retransmission is diagnosed, displaying "WO0C" to indicate that an erroneous sequence is diagnosed, displaying "WOOD" to indicate that a data loss is diagnosed, displaying "WO0E" to indicate a delay overtime is diagnosed; and displaying "WOOF" to indicate that an invalid insertion is diagnosed, displaying "WO0G" to indicate a disguised message is diagnosed and displaying "WO0H" to indicate an erroneous addressing is diagnosed;

and after fault processing is finished, proceeding to the next period for diagnosis;

step 8, resetting the number of times of abnormities diagnosed, and performing fault recovery processing of:

1) setting the quality bit of the upper layer data of the received data frame to be valid, i.e., setting the quality bit of the upper layer data to be 0; and

2) exterior reminder: turning on the "RUN" light representing normal communication, a dot matrix not displaying any information represents a good result of network diagnosis;

and after the fault recovery processing is finished, proceeding to the next period for diagnosis.

According to IEC61508 SIL3 (Safety Integrity Level) standard, a safety network for a nuclear power plant has to ensure a residual error rate being less than 10-9. After actual testing and fault insertion, the self-diagnosis method of the present invention can correctly diagnose eight transmission errors of the network, and the network residual error rate meets the SIL3 requirement of the level standard.

**Claims**

1. A self-diagnosis method for a communication protocol of a security-level instrumentation and control system of a nuclear power plant, wherein the method based on a point-to-point network protocol composed of an application layer, a data link layer and a physical layer, a sender and a receiver periodically operating, a data frame structurally comprising a destination MAC address, a source MAC address, an application layer protocol number, an application layer data which is a data frame of the application layer, and a CRC checksum, the application layer data further comprising an application mode specified according to the protocol, a TICK value for counting a number of periods, a message serial number representing a serial number of a message sent in the period, a message frame number, a retransmission position, upper-layer data representing a command that the system collects of needs to send, and a CRC check code, and the upper layer data further comprises a data value and a quality bit, wherein the CRC checksum in the data frame is used to check the data frame, and the CRC check code in the application layer data is used to check the data frame of the application layer, the method comprising the following steps:

   step 1, acquiring the destination MAC address, the source MAC address and the upper-layer data, and packaging and sending the acquired upper-layer data in a frame format by the sender,
   wherein a retransmission position of a first transmission data frame is 0, and a retransmission position of a retransmission data frame is 1, the retransmission position represents a data frame is initially transmitted or retransmitted in the period, wherein setting the retransmission position 1, if the data frame is retransmitted, and setting the retransmission position 0, if the data frame is initially transmitted;
   step 2, if the receiver does not receive the data frame, entering a step 6; if the receiver receives the data frame sent by the sender, detecting the destination MAC address and the source MAC address of the data frame to diagnose an error address, recording an abnormal cause and entering a step 7 during diagnosis abnormality, and entering a step 3 during diagnosis normality, wherein diagnosing an error address when the destination MAC address of the data frame is first preset MAC address, the source MAC address is second preset MAC address, wherein determining the diagnosis is abnormal if a local MAC address of the receiver is different from the destination MAC address of the data frame, or a local MAC address of the sender is different from the source MAC address of the data frame,
   step 3, determining the TICK and the message serial number of the data frame, judging whether four network errors including retransmission, disorder, loss and invalid insertion happen or not by detecting a value of the TICK and a value of the message serial number, recording an abnormal cause and entering the step 7 during diagnosis abnormality, and entering a step 4 during diagnosis normality;
   wherein determining the retransmission happens, if the TICK value, the message serial and the retransmission bit of the last data frame is the same as the TICK value, the message serial and the retransmission bit of the received data frame this time;
   determining the disorder happens, if the sequential order of the TICK value of the last data frame does not arrive in the sequential order of the TICK value of the received data frame this time, but the message serial and the retransmission bit of the last data frame is the same as the message serial and the retransmission bit of the received data frame this time;
   determining the loss happens, if the TICK value of the received data frame this time is different from the TICK value of the last data frame, and the message serial and the retransmission bit of the last data frame is the same as the message serial and the retransmission bit of the received data frame this time;
   determining the invalid insertion happens, if the TICK value of the received data frame this time is different from the TICK value of the last data frame, and the message serial of the received data frame this time is different from the message serial of the last data frame, and the retransmission bit of the last data frame is the same as the retransmission bit of the received data frame this time;
   step 4, performing respective CRC checks on the initially transmitted data frame and the retransmitted date frame, and performing a binary comparison on upper-layer data of the initially transmitted data frame and the retransmitted date frame if the checks are successful; if the upper layer data of the the initially transmitted data frame and the retransmitted date frame are compared to be consistent, diagnosing it as normal, proceeding to the step 5, otherwise, diagnosing it as data collapse, and proceeding to the step 7; wherein the initially transmitted data frame is a data frame initially transmitted, the retransmitted date frame is a data frame retransmitted;

step 5, detecting the application mode and the application layer protocol number of the data frame, if the application mode and the application layer protocol number are not preset values, diagnosing the message to be a camouflage message, recording an abnormal cause and entering the step 7, and entering a step 8 during diagnosis normality;

step 6, if the receiver does not receive the data frame within the time exceeding a set data frame receiving time window, diagnosing the error to be time-out delay, recording an abnormal cause and entering the step 7; if the receiver receives the data frame within the set data frame receiving time window, keeping a current state and recording the time when the data frame is received;

step 7, a number of diagnosis abnormality times increased by 1 when the data frame diagnoses an abnormality, if the number of diagnosis abnormality times does not reach the tolerance threshold value, keeping the state unchanged, or else, performing fault handling, namely making the quality position for receiving the upper-layer data of the data frame invalid, and displaying a specific cause of a fault by means of a dot matrix;

step 8, clearing the number of diagnosis abnormality times to be zero, and performing fault recovery handling, namely making the quality position for receiving the upper-layer data of the data frame valid, and displaying network diagnosis to be normal by means of the dot matrix;

wherein the number of periods is the number of times the data frame is diagnosed;

wherein the quality position's value is used to determine whether the upper layer data of the data frame is abnormal.

2. The self-diagnosis method for the communication protocol of the security-level instrumentation and control system of the nuclear power plant of claim 1, **characterized in that** a network data volume of the communication protocol is constant, an interface mode is a full-duplex asynchronous transmission mode, and a transmission medium is a multimode fiber.

3. The self-diagnosis method for the communication protocol of the security-level instrumentation and control system of the nuclear power plant of claim 1, **characterized in that** the destination MAC address, the source MAC address and the upper-layer data are acquired by a configuration tool.

4. The self-diagnosis method for the communication protocol of the security-level instrumentation and control system of the nuclear power plant of claim 1, **characterized in that** the data frame format of the application layer further comprises total length of a message, valid data length of a frame and a reserved area.

5. The self-diagnosis method for the communication protocol of the security-level instrumentation and control system of the nuclear power plant of claim 4, **characterized in that** the valid data length of the frame is acquired by the configuration tool.

6. The self-diagnosis method for the communication protocol of the security-level instrumentation and control system of the nuclear power plant of claim 1, **characterized in that** the length of the data frame of the application layer ranges from 256 bytes to 1500 bytes.

7. The self-diagnosis method for the communication protocol of the security-level instrumentation and control system of the nuclear power plant of claim 1, **characterized in that** the length of the data frame of the application layer ranges from 512 bytes to 1200 bytes.

8. The self-diagnosis method for the communication protocol of the security-level instrumentation and control system of the nuclear power plant of claim 1, **characterized in that** the operation periods of the receiver and the sender are the same.

9. The self-diagnosis method for the communication protocol of the security-level instrumentation and control system of the nuclear power plant of claim 1, **characterized in that** the operation periods of the receiver and the sender range from 8 milliseconds to 20 milliseconds.

10. The self-diagnosis method for the communication protocol of the security-level instrumentation and control system of the nuclear power plant of claim 1, **characterized in that** the data frame receiving time window set by the receiver is 2-4 times as much as the maximum value of the operation periods of the sender and the receiver.

**11.** The self-diagnosis method for the communication protocol of the security-level instrumentation and control system of the nuclear power plant of claim 1, **characterized in that** the tolerance threshold value of the numerical range of diagnosis abnormality times is 2-5 times.

**Patentansprüche**

**1.** Selbstdiagnoseverfahren für ein Kommunikationsprotokoll eines sicherheitsrelevanten Mess- und Steuerungssystems eines Kernkraftwerks, wobei das Verfahren auf einem Punkt-zu-Punkt-Netzwerkprotokoll basiert, das aus einer Anwendungsschicht, einer Datenverbindungsschicht und einer physikalischen Schicht besteht, wobei ein Sender und ein Empfänger periodisch arbeiten, wobei ein Datenrahmen strukturell eine Ziel-MAC-Adresse, eine Quell-MAC-Adresse, eine Anwendungsschicht-Protokollnummer, Anwendungsschichtdaten, die ein Datenrahmen der Anwendungsschicht sind, und eine CRC-Prüfsumme umfasst, wobei die Anwendungsschichtdaten ferner einen gemäß dem Protokoll festgelegten Anwendungsmodus, einen TICK-Wert zur Zählung der Periodenanzahl, eine Nachrichtenseriennummer, die eine Seriennummer einer in der Periode gesendeten Nachricht darstellt, eine Nachrichtenrahmennummer, eine Wiederübertragungsposition, Daten der oberen Schicht, die einen Befehl darstellen, den das System sammelt oder senden muss, und einen CRC-Prüfcode umfassen, und die Daten der oberen Schicht ferner einen Datenwert und ein Qualitätsbit umfassen, wobei die CRC-Prüfsumme im Datenrahmen verwendet wird, um den Datenrahmen zu überprüfen, und der CRC-Prüfcode in den Anwendungsschichtdaten verwendet wird, um den Datenrahmen der Anwendungsschicht zu überprüfen, wobei das Verfahren die folgenden Schritte umfasst:

Schritt 1: Erfassen der Ziel-MAC-Adresse, der Quell-MAC-Adresse und der Daten der oberen Schicht, und Verpacken und Senden der erfassten Daten der oberen Schicht in einem Rahmenformat durch den Sender, wobei eine Wiederübertragungsposition eines ersten Übertragungsdatenrahmens 0 ist und eine Wiederübertragungsposition eines Wiederübertragungsdatenrahmens 1 ist, wobei die Wiederübertragungsposition einen Datenrahmen darstellt, der erstmals übertragen oder wiederholt übertragen wird, wobei die Wiederübertragungsposition auf 1 gesetzt wird, wenn der Datenrahmen wiederholt übertragen wird, und die Wiederübertragungsposition auf 0 gesetzt wird, wenn der Datenrahmen erstmals übertragen wird;
Schritt 2: wenn der Empfänger den Datenrahmen nicht empfängt, Übergehen zu Schritt 6; wenn der Empfänger den vom Sender gesendeten Datenrahmen empfängt, Erkennen der Ziel-MAC-Adresse und der Quell-MAC-Adresse des Datenrahmens, um eine Fehleradresse zu diagnostizieren, Aufzeichnen einer anormalen Ursache und Übergehen zu Schritt 7 während der Diagnose einer Anomalie, und Übergehen zu Schritt 3 während der Diagnose einer Normalität, wobei einer Fehleradresse diagnostiziert wird, wenn die Ziel-MAC-Adresse des Datenrahmens die erste voreingestellte MAC-Adresse ist und die Quell-MAC-Adresse die zweite voreingestellte MAC-Adresse ist, wobei die Diagnose als anormal bestimmt wird, wenn eine lokale MAC-Adresse des Empfängers sich von der Ziel-MAC-Adresse des Datenrahmens unterscheidet und eine lokale MAC-Adresse des Senders sich von der Quell-MAC-Adresse des Datenrahmens unterscheidet,
Schritt 3: Bestimmen des TICK und der Nachrichtenseriennummer des Datenrahmens, Beurteilen, ob vier Netzwerkfehler, einschließlich Wiederübertragung, Störung, Verlust und ungültiger Einfügung, vorliegen oder nicht, indem ein Wert des TICK und ein Wert der Nachrichtenseriennummer erkannt werden, Aufzeichnen einer anormalen Ursache und Übergehen zu Schritt 7 während einer Diagnose einer Anomalie und Übergehen zu Schritt 4 während einer Diagnose einer Normalität;
wobei das Bestimmen der Wiederübertragung erfolgt, wenn der TICK-Wert, die Nachrichtenserie und das Wiederübertragungsbit des letzten Datenrahmens gleich dem TICK-Wert, der Nachrichtenserie und dem Wiederübertragungsbit des diesmal empfangenen Datenrahmens sind;
wobei das Bestimmen der Störung erfolgt, wenn die sequenzielle Reihenfolge des TICK-Werts des letzten Datenrahmens nicht in der sequenziellen Reihenfolge des TICK-Werts des empfangenen Datenrahmens ankommt, jedoch die Nachrichtenserie und das Wiederübertragungsbit des letzten Datenrahmens gleich der Nachrichtenserie und dem Wiederübertragungsbit des diesmal empfangenen Datenrahmens sind;
wobe das Bestimmen des Verlusts erfolgt, wenn der TICK-Wert des diesmal empfangenen Datenrahmens sich von dem TICK-Wert des letzten Datenrahmens unterscheidet und die Nachrichtenserie und das Wiederübertragungsbit des letzten Datenrahmens gleich der Nachrichtenserie und dem Wiederübertragungsbit des diesmal empfangenen Datenrahmens sind;
wobei das Bestimmen der ungültigen Einfügung erfolgt, wenn der TICK-Wert des diesmal empfangenen Datenrahmens sich von dem TICK-Wert des letzten Datenrahmens unterscheidet und die Nachrichtenserie des diesmal empfangenen Datenrahmens sich von der Nachrichtenserie des letzten Datenrahmens unterscheidet, und das Wiederübertragungsbit des letzten Datenrahmens gleich dem Wiederübertragungsbit des diesmal empfangenen Datenrahmens ist;

Schritt 4: Durchführen jeweiliger CRC-Prüfungen auf dem erstmals übertragenen Datenrahmen und dem wiederholt übertragenen Datenrahmen, und Durchführen eines binären Vergleichs der Daten der oberen Schicht des erstmals übertragenen Datenrahmens und des wiederholt übertragenen Datenrahmens, wenn die Prüfungen erfolgreich sind; wenn die Daten der oberen Schicht des erstmals übertragenen Datenrahmens und des wiederholt übertragenen Datenrahmens als konsistent verglichen werden, Diagnostizieren dieser als normal und Fortfahren mit Schritt 5, andernfalls Diagnostizieren dieser als Datenkollaps und Fortfahren mit Schritt 7; wobei der erstmals übertragene Datenrahmen ein erstmals übertragener Datenrahmen ist und der wiederholt übertragene Datenrahmen ein wiederholt übertragener Datenrahmen ist;

Schritt 5: Erkennen des Anwendungsmodus und der Anwendungsschicht-Protokollnummer des Datenrahmens, wenn der Anwendungsmodus und die Anwendungsschicht-Protokollnummer keine voreingestellten Werte sind, Diagnostizieren der Nachricht als Tarnnachricht, Aufzeichnen einer anormalen Ursache und Übergehen zu Schritt 7 und Übergehen zu Schritt 8 während einer Diagnose einer Normalität;

Schritt 6: wenn der Empfänger den Datenrahmen nicht innerhalb der Zeit empfängt, die ein eingestelltes Datenrahmen-Empfangszeitfenster überschreitet, Diagnostizieren des Fehlers als Timeout-Verzögerung, Aufzeichnen einer anormalen Ursache und Übergehen zu Schritt 7; wenn der Empfänger den Datenrahmen innerhalb des eingestellten Datenrahmen-Empfangszeitfensters empfängt, Beibehalten eines aktuellen Zustands und Aufzeichnen des Zeitpunkts, zu dem der Datenrahmen empfangen wird;

Schritt 7: Die Anzahl der Diagnose-Anomaliezeiten erhöht sich um 1, wenn der Datenrahmen eine Anomalie diagnostiziert, wenn die Anzahl der Diagnose-Anomaliezeiten den Toleranzschwellenwert nicht erreicht, unverändertes Beibehalten des Zustands, oder andernfalls Durchführen einer Fehlerbehandlung, d. h., die Qualitätsposition für den Empfang der Daten der oberen Schicht des Datenrahmens wird ungültig gemacht und eine spezifische Fehlerursache wird mittels einer Punktmatrix angezeigt;

Schritt 8: Zurücksetzen der Anzahl der Diagnose-Anomaliezeiten auf Null, und Durchführen der Fehlerbehebung, d. h., die Qualitätsposition für den Empfang der Daten der oberen Schicht des Datenrahmens wird gültig gemacht und die Netzwerkdiagnose wird mittels der Punktmatrix als normal angezeigt; wobei die Anzahl der Perioden die Anzahl der Diagnosen des Datenrahmens ist; wobei der Wert der Qualitätsposition verwendet wird, um zu bestimmen, ob die Daten der oberen Schicht des Datenrahmens anormal sind.

2. Selbstdiagnoseverfahren für das Kommunikationsprotokoll des sicherheitsrelevanten Mess- und Steuerungssystems des Kernkraftwerks nach Anspruch 1, **dadurch gekennzeichnet, dass** ein Netzwerkdatenvolumen des Kommunikationsprotokolls konstant ist, ein Schnittstellenmodus ein Vollduplex-Asynchronübertragungsmodus ist und ein Übertragungsmedium eine Multimode-Faser ist.

3. Selbstdiagnoseverfahren für das Kommunikationsprotokoll des sicherheitsrelevanten Mess- und Steuerungssystems des Kernkraftwerks nach Anspruch 1, **dadurch gekennzeichnet, dass** die Ziel-MAC-Adresse, die Quell-MAC-Adresse und die Daten der oberen Schicht von einem Konfigurationstool erfasst werden.

4. Selbstdiagnoseverfahren für das Kommunikationsprotokoll des sicherheitsrelevanten Mess- und Steuerungssystems des Kernkraftwerks nach Anspruch 1, **dadurch gekennzeichnet, dass** das Datenrahmenformat der Anwendungsschicht ferner die Gesamtlänge einer Nachricht, die gültige Datenlänge eines Rahmens und einen reservierten Bereich umfasst.

5. Selbstdiagnoseverfahren für das Kommunikationsprotokoll des sicherheitsrelevanten Mess- und Steuerungssystems des Kernkraftwerks nach Anspruch 4, **dadurch gekennzeichnet, dass** die gültige Datenlänge eines Rahmens vom Konfigurationstool erfasst wird.

6. Selbstdiagnoseverfahren für das Kommunikationsprotokoll des sicherheitsrelevanten Mess- und Steuerungssystems des Kernkraftwerks nach Anspruch 1, **dadurch gekennzeichnet, dass** die Länge des Datenrahmens der Anwendungsschicht zwischen 256 Bytes und 1500 Bytes liegt.

7. Selbstdiagnoseverfahren für das Kommunikationsprotokoll des sicherheitsrelevanten Mess- und Steuerungssystems des Kernkraftwerks nach Anspruch 1, **dadurch gekennzeichnet, dass** die Länge des Datenrahmens der Anwendungsschicht zwischen 512 Bytes und 1200 Bytes liegt.

8. Selbstdiagnoseverfahren für das Kommunikationsprotokoll des sicherheitsrelevanten Mess- und Steuerungssystems des Kernkraftwerks nach Anspruch 1, **dadurch gekennzeichnet, dass** die Betriebsperioden des Empfängers und des Senders gleich sind.

9. Selbstdiagnoseverfahren für das Kommunikationsprotokoll des sicherheitsrelevanten Mess- und Steuerungssystems des Kernkraftwerks nach Anspruch 1, **dadurch gekennzeichnet, dass** die Betriebsperioden des Empfängers und des Senders zwischen 8 Millisekunden und 20 Millisekunden liegen.

10. Selbstdiagnoseverfahren für das Kommunikationsprotokoll des sicherheitsrelevanten Mess- und Steuerungssystems des Kernkraftwerks nach Anspruch 1, **dadurch gekennzeichnet, dass** das vom Empfänger eingestellte Datenrahmen-Empfangszeitfenster 2-4 Mal so groß ist wie der Maximalwert der Betriebsperioden des Senders und des Empfängers.

11. Selbstdiagnoseverfahren für das Kommunikationsprotokoll des sicherheitsrelevanten Mess- und Steuerungssystems des Kernkraftwerks nach Anspruch 1, **dadurch gekennzeichnet, dass** der Toleranzschwellenwert des numerischen Bereichs der Diagnose-Anomaliezeiten das 2- bis 5-Fache beträgt.

**Revendications**

1. Procédé d'autodiagnostic pour un protocole de communication d'un système de contrôle-commande de niveau de sécurité d'une centrale nucléaire, où le procédé est basé sur un protocole de réseau point à point composé d'une couche application, d'une couche liaison de données et d'une couche physique, un émetteur et un récepteur fonctionnant périodiquement, une trame de données comprenant structurellement une adresse MAC de destination, une adresse MAC source, un numéro de protocole de couche application, des données de couche application qui sont une trame de données de la couche application, et une somme de contrôle CRC, les données de couche application comprenant en outre un mode d'application spécifié selon le protocole, une valeur TICK pour compter un nombre de périodes, un numéro de série de message représentant un numéro de série d'un message envoyé dans la période, un numéro de trame de message, une position de retransmission, des données de couche supérieure représentant une instruction que le système collecte ou doit envoyer, et un code de contrôle CRC, et les données de couche supérieure comprennent en outre une valeur de données et un bit de qualité, où la somme de contrôle CRC dans la trame de données est utilisée pour contrôler la trame de données, et le code de contrôle CRC dans les données de couche application est utilisé pour contrôler la trame de données de la couche application, le procédé comprenant les étapes suivantes :

étape 1, l'acquisition de l'adresse MAC de destination, de l'adresse MAC source et des données de couche supérieure, et

le regroupement et l'envoi des données de couche supérieure acquises dans un format de trame par l'émetteur, dans lequel une position de retransmission d'une première trame de données de transmission est 0, et une position de retransmission d'une trame de données de retransmission est 1, la position de retransmission représente une trame de données initialement transmise ou retransmise dans la période, où la position de retransmission est définie sur 1, si la trame de données est retransmise, et la position de retransmission est définie sur 0, si la trame de données est initialement transmise ;

étape 2, si le récepteur ne reçoit pas la trame de données, le passage à l'étape 6 ; si le récepteur reçoit la trame de données envoyée par l'émetteur, la détection de l'adresse MAC de destination et de l'adresse MAC source de la trame de données pour diagnostiquer une adresse d'erreur, l'enregistrement d'une cause anormale et le passage à l'étape 7 pendant le diagnostic d'anomalie, et le passage à l'étape 3 pendant le diagnostic de normalité, où le diagnostic d'une adresse d'erreur est effectué lorsque l'adresse MAC de destination de la trame de données est une première adresse MAC prédéfinie, l'adresse MAC source est une seconde adresse MAC prédéfinie, où le diagnostic est déterminé comme anormal si une adresse MAC locale du récepteur est différente de l'adresse MAC de destination de la trame de données, une adresse MAC locale de l'émetteur est différente de l'adresse MAC source de la trame de données,

étape 3, la détermination du TICK et du numéro de série de message de la trame de données, le jugement pour savoir si quatre erreurs de réseau comprenant la retransmission, le désordre, la perte et l'insertion invalide se produisent ou non en détectant une valeur du TICK et une valeur du numéro de série de message, l'enregistrement d'une cause anormale et le passage à l'étape 7 pendant le diagnostic d'anomalie, et le passage à l'étape 4 pendant le diagnostic de normalité ;

dans lequel la détermination que la retransmission se produit, si la valeur TICK, le numéro de série de message et le bit de retransmission de la dernière trame de données sont identiques à la valeur TICK, au numéro de série de message et au bit de retransmission de la trame de données reçue cette fois-ci ;

la détermination que le désordre se produit, si l'ordre séquentiel de la valeur TICK de la dernière trame de données n'arrive pas dans l'ordre séquentiel de la valeur TICK de la trame de données reçue cette fois-ci, mais le numéro de série de message et le bit de retransmission de la dernière trame de données sont identiques au numéro de série de message et au bit de retransmission de la trame de données reçue cette fois-ci ;

la détermination que la perte se produit, si la valeur TICK de la trame de données reçue cette fois-ci est différente de la valeur TICK de la dernière trame de données, et le numéro de série de message et le bit de retransmission de la dernière trame de données sont identiques au numéro de série de message et au bit de retransmission de la trame de données reçue cette fois-ci ;

la détermination que l'insertion invalide se produit, si la valeur TICK de la trame de données reçue cette fois-ci est différente de la valeur TICK de la dernière trame de données, et le numéro de série de message de la trame de données reçue cette fois-ci est différent du numéro de série de message de la dernière trame de données, et le bit de retransmission de la dernière trame de données est identique au bit de retransmission de la trame de données reçue cette fois-ci ;

étape 4, la réalisation de contrôles CRC respectifs sur la trame de données initialement transmise et la trame de données retransmise, et la réalisation d'une comparaison binaire sur des données de couche supérieure de la trame de données initialement transmise et de la trame de données retransmise si les contrôles sont réussis ; si les données de couche supérieure de la trame de données initialement transmise et de la trame de données retransmise sont comparées pour être cohérentes, l'établissement d'un diagnostic normal, le passage à l'étape 5, sinon, l'établissement d'un diagnostic d'effondrement de données et le passage à l'étape 7 ;

dans lequel la trame de données initialement transmise est une trame de données initialement transmise, la trame de données retransmise est une trame de données retransmise ;

étape 5, la détection du mode d'application et du numéro de protocole de couche application de la trame de données, si le mode d'application et le numéro de protocole de couche application ne sont pas des valeurs prédéfinies, le diagnostic du message comme étant un message de camouflage, l'enregistrement d'une cause anormale et le passage à l'étape 7, et le passage à l'étape 8 pendant le diagnostic de normalité ;

étape 6, si le récepteur ne reçoit pas la trame de données dans le temps dépassant une fenêtre de temps de réception de trame de données définie, le diagnostic de l'erreur comme étant un dépassement de délai, l'enregistrement d'une cause anormale et le passage à l'étape 7 ; si le récepteur reçoit la trame de données dans la fenêtre de temps de réception de trame de données définie, le maintien d'un état actuel et l'enregistrement du temps lorsque la trame de données est reçue ;

étape 7, le nombre de fois où une anomalie a été diagnostiquée augmente de 1 lorsque la trame de données diagnostique une anomalie, si le nombre de fois où une anomalie a été diagnostiquée n'atteint pas la valeur seuil de tolérance, le maintien de l'état inchangé, ou bien, la réalisation d'un traitement de défaillance, à savoir le fait de rendre invalide la position de qualité pour la réception des données de couche supérieure de la trame de données et l'affichage d'une cause spécifique d'une défaillance au moyen d'une matrice de points ;

étape 8, la remise à zéro du nombre de fois où une anomalie a été diagnostiquée, et la réalisation d'un traitement de reprise après défaillance, à savoir le fait de rendre valide la position de qualité pour la réception des données de couche supérieure de la trame de données, et l'affichage d'un diagnostic de réseau comme étant normal au moyen de la matrice de points ;

dans lequel le nombre de périodes est le nombre de fois où la trame de données est diagnostiquée ;

dans lequel la valeur de la position de qualité est utilisée pour déterminer si les données de couche supérieure de la trame de données sont anormales.

2. Procédé d'autodiagnostic pour le protocole de communication du système de contrôle-commande de niveau de sécurité de la centrale nucléaire selon la revendication 1, **caractérisé en ce qu'**un volume de données de réseau du protocole de communication est constant, un mode d'interface est un mode de transmission asynchrone bidirectionnelle simultanée et un support de transmission est une fibre multimode.

3. Procédé d'autodiagnostic pour le protocole de communication du système de contrôle-commande de niveau de sécurité de la centrale nucléaire selon la revendication 1, **caractérisé en ce que** l'adresse MAC de destination, l'adresse MAC source et les données de couche supérieure sont acquises par un outil de configuration.

4. Procédé d'autodiagnostic pour le protocole de communication du système de contrôle-commande de niveau de sécurité de la centrale nucléaire selon la revendication 1, **caractérisé en ce que** le format de trame de données de la couche application comprend en outre une longueur totale d'un message, une longueur de données valides d'une trame et une zone réservée.

5. Procédé d'autodiagnostic pour le protocole de communication du système de contrôle-commande de niveau de sécurité de la centrale nucléaire selon la revendication 4, **caractérisé en ce que** la longueur de données valides de la trame est acquise par l'outil de configuration.

6. Procédé d'autodiagnostic pour le protocole de communication du système de contrôle-commande de niveau de sécurité de la centrale nucléaire selon la revendication 1, **caractérisé en ce que** la longueur de la trame de données de la couche application se trouve dans la plage allant de 256 octets à 1500 octets.

7. Procédé d'autodiagnostic pour le protocole de communication du système de contrôle-commande de niveau de sécurité de la centrale nucléaire selon la revendication 1, **caractérisé en ce que** la longueur de la trame de données de la couche application se trouve dans la plage allant de 512 octets à 1200 octets.

8. Procédé d'autodiagnostic pour le protocole de communication du système de contrôle-commande de niveau de sécurité de la centrale nucléaire selon la revendication 1, **caractérisé en ce que** les périodes de fonctionnement du récepteur et de l'émetteur sont identiques.

9. Procédé d'autodiagnostic pour le protocole de communication du système de contrôle-commande de niveau de sécurité de la centrale nucléaire selon la revendication 1, **caractérisé en ce que** les périodes de fonctionnement du récepteur et de l'émetteur se trouvent dans la plage allant de 8 millisecondes à 20 millisecondes.

10. Procédé d'autodiagnostic pour le protocole de communication du système de contrôle-commande de niveau de sécurité de la centrale nucléaire selon la revendication 1, **caractérisé en ce que** la fenêtre de temps de réception de trame de données définie par le récepteur est 2 à 4 fois supérieure à la valeur maximale des périodes de fonctionnement de l'émetteur et du récepteur.

11. Procédé d'autodiagnostic pour le protocole de communication du système de contrôle-commande de niveau de sécurité de la centrale nucléaire selon la revendication 1, **caractérisé en ce que** la valeur seuil de tolérance de la plage numérique de fois où une anomalie a été diagnostiquée est de 2 à 5 fois.

Figure 1

```
                    ┌─────────────┐
                    │    Start    │
                    └──────┬──────┘
                           │
                           ▼
            ┌──────────────────────────────┐
            │ Initialize to get MAC address │
            │      and time of period       │
            └──────────────┬────────────────┘
                           │
                           ▼
            ┌──────────────────────────────┐
            │     Perform periodic          │
            │       scheduling              │
            └──────────────┬────────────────┘
                           │
                           ▼
            ┌──────────────────────────────┐
            │     Acquire upper layer       │
            │           data                │
            └──────────────┬────────────────┘
                           │
                           ▼
            ┌──────────────────────────────┐
            │      Package data by          │
            │         protocol              │
            └──────────────┬────────────────┘
                           │
                           ▼
            ┌──────────────────────────────┐
            │      Send initially           │
            │   transmitted data frame      │
            └──────────────┬────────────────┘
                           │
                           ▼
            ┌──────────────────────────────┐
            │     Send retransmitted        │
            │         date frame            │
            └──────────────┬────────────────┘
                           │
                           ▼
            ┌──────────────────────────────┐
            │     Perform periodic          │
            │       scheduling              │
            └───────────────────────────────┘
```

# Figure 2

Figure 3 (also Drawing of Abstract)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 103457791 A
- CN 102984097 A
- EP 2053774 A1
- WO 2006054836 A2